(19)

**Europäisches Patentamt**
**European Patent Office**
**Office européen des brevets**

(11) **EP 3 981 578 A1**

(12) **EUROPEAN PATENT APPLICATION**

(43) Date of publication:
**13.04.2022 Bulletin 2022/15**

(21) Application number: **21200052.5**

(22) Date of filing: **30.09.2021**

(51) International Patent Classification (IPC):
**B29C 64/00** (2017.01)    **C08F 290/04** (2006.01)
**C08L 51/04** (2006.01)

(52) Cooperative Patent Classification (CPC):
(C-Sets available)
**B33Y 70/00; B29C 64/124; B33Y 10/00;**
**C08F 290/042; C08L 51/04**          (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **06.10.2020 JP 2020169192**

(71) Applicant: **Sumitomo Rubber Industries, Ltd.**
**Kobe-shi, Hyogo-ken 651-0072 (JP)**

(72) Inventors:
• **SUGIMOTO, Mutsuki**
  **Kobe-shi, 651-0072 (JP)**
• **AKASAKA, Takuro**
  **Kobe-shi, 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **POLYMER COMPOSITION FOR STEREOLITHOGRAPHY**

(57)    A polymer composition for stereolithography containing a liquid polymer, a monomer, a photopolymerization initiator, and a thermal polymerization initiator.

**(Cont. next page)**

EP 3 981 578 A1

(52) Cooperative Patent Classification (CPC): (Cont.)

C-Sets
**C08F 290/042, C08F 220/1811**

**Description**

TECHNICAL FIELD

The present invention relates to a polymer composition for stereolithography, an elastic shaped article obtained by curing the composition, and a method for producing an elastic shaped article using the composition.

BACKGROUND ART

In recent years, additive manufacturing equipment (so-called 3D printers) for producing three-dimensional structures by laminating and curing layers of resin based on the design data of the three-dimensional structures has been put to practical use. Three-dimensional structures produced using additive manufacturing equipment, which are made of resin, are commonly known. On the other hand, if three-dimensional structures (elastic shaped articles) whose temperature dependence of elastic modulus and compression set are lower than before can be produced, they are expected to be used for applications different from before.

CITATION LIST

Patent Literature

Patent Literature 1: WO 2017/154335

SUMMARY OF INVENTION

Technical Problem

For example, Patent Literature 1 discloses a rubber composition for additive manufacturing containing a liquid rubber. This rubber composition can be applied to additive manufacturing equipment to suitably produce elastic shaped articles.

For example, stereolithography methods such as SLA (stereolithography laser method: Stereolithography Apparatus), DLP (stereolithography projector (surface exposure) method: Digital Light Processing), and LCD (stereolithography liquid display method: Liquid Crystal Display) perform stereolithography of three-dimensional shapes by sequentially laminating and curing layers of a liquid composition for stereolithography at a thickness of about 0.01 to 0.5 mm.

In the production of a shaped article using a composition for stereolithography, after the shaped article is formed, it may be further subjected to a secondary treatment in which the entire shaped article is irradiated with light. The present inventors have newly found that, in this case, if the shaped article has a complicated structure, light may not sufficiently reach the inside of the shaped article, and the shaped article may not be sufficiently cured.

Under such circumstances, it is a main object of the present invention to provide a novel polymer composition for stereolithography capable of suitably producing an elastic shaped article by a stereolithography method, and sufficiently curing the elastic shaped article. It is another object of the present invention to provide an elastic shaped article obtained by curing the polymer composition for stereolithography, and a method for producing an elastic shaped article using the composition.

Solution to Problem

The present inventors have conducted extensive research to solve the aforementioned problem. As a result, the inventors have found that a polymer composition for stereolithography containing a liquid polymer, a monomer, a photopolymerization initiator, and a thermal polymerization initiator is capable of suitably producing an elastic shaped article by a stereolithography method, and sufficiently curing the elastic shaped article by heating. The present invention has been completed by conducting further research based on these findings.

In summary, the present invention provides aspects of the invention as itemized below:

Item 1. A polymer composition for stereolithography comprising a liquid polymer, a monomer, a photopolymerization initiator, and a thermal polymerization initiator.

Item 2. The polymer composition for stereolithography according to item 1, wherein the liquid polymer has a (meth)acryloyl group.

Item 3. The polymer composition for stereolithography according to item 1 or 2, wherein the liquid polymer contains at least one of liquid isoprene having a (meth)acryloyl group and liquid isobutylene having a (meth)acryloyl group.

Item 4. The polymer composition for stereolithography according to any one of items 1 to 3, wherein the liquid polymer has a number average molecular weight of 5,000 or more and 500,000 or less.

Item 5. The polymer composition for stereolithography according to any one of items 1 to 4, wherein the liquid polymer has a viscosity of 100 mPa·s or more and 1,000,000 mPa·s or less, as measured using an E-type viscometer under a cone plate with a diameter of 25 mm and a shear rate of 100 sec$^{-1}$, in an environment at a temperature of 25°C and a relative humidity of 50%.

Item 6. The polymer composition for stereolithography according to any one of items 1 to 5, wherein the liquid polymer content is 15% by mass or more and 70% by mass or less.

Item 7. The polymer composition for stereolithography according to any one of items 1 to 6, wherein the monomer content is 30% by mass or more and 85% by mass or less, based on a total of 100% by mass of the liquid polymer and the monomer.

Item 8. The polymer composition for stereolithography according to any one of items 1 to 7, further comprising an oligomer, wherein

the monomer content is 30% by mass or more and 90% by mass or less, based on a total of 100% by mass of the liquid polymer, the monomer, and the oligomer.

Item 9. The polymer composition for stereolithography according to any one of items 1 to 8, further comprising an oligomer, wherein

a total content of the monomer and the oligomer is 30% by mass or more and 90% by mass or less, based on a total of 100% by mass of the liquid polymer, the monomer, and the oligomer.

Item 10. The polymer composition for stereolithography according to item 8 or 9, wherein the oligomer is at least one of a urethane (meth)acrylate and an epoxy (meth)acrylate.

Item 11. The polymer composition for stereolithography according to any one of items 8 to 10, wherein the oligomer contains a (meth)acrylate.

Item 12. The polymer composition for stereolithography according to any one of items 1 to 11, wherein the monomer is at least one of monofunctional to tetrafunctional.

Item 13. The polymer composition for stereolithography according to any one of items 1 to 12, wherein the monomer contains a (meth)acrylate.

Item 14. An elastic shaped article, which is a cured product of the polymer composition for stereolithography according to any one of items 1 to 13.

Item 15. A method for producing an elastic shaped article, comprising the steps of:

forming a first-layer cured product by supplying the polymer composition for stereolithography according to any one of items 1 to 13 onto a stereolithography table, and irradiating the polymer composition for stereolithography with light to cure the polymer composition for stereolithography;

forming a second-layer cured product by supplying the polymer composition for stereolithography for forming the second-layer cured product onto the first-layer cured product, and irradiating the polymer composition for stereolithography with light to cure the polymer composition for stereolithography;

repeating the same step as the step of forming the second-layer cured product until an Nth layer is formed to produce an elastic shaped article with a three-dimensional shape; and

heating the elastic shaped article.

Advantageous Effects of Invention

The present invention can provide a novel polymer composition for stereolithography capable of suitably producing an elastic shaped article by a stereolithography method, and sufficiently curing the elastic shaped article. The present invention can also provide an elastic shaped article obtained by curing the polymer composition for stereolithography, and a method for producing an elastic shaped article using the composition.

DESCRIPTION OF EMBODIMENTS

A polymer composition for stereolithography of the present invention has a feature in that it contains a liquid polymer, a monomer, a photopolymerization initiator, and a thermal polymerization initiator. Because of this feature, the polymer composition for stereolithography of the present invention is capable of suitably producing an elastic shaped article by a stereolithography method, and sufficiently curing the elastic shaped article. Hereinafter, the polymer composition for stereolithography of the present invention, an elastic shaped article obtained by curing the composition, and a method for producing an elastic shaped article using the composition will be described in detail.

As used herein, "polymer composition for stereolithography" refers to a polymer composition used in a stereolithography method, which produces a three-dimensional structure by repeatedly laminating and photocuring layers of the polymer composition based on, for example, the design data of the three-dimensional structure, using additive manufacturing equipment (such as a so-called 3D printer) for the stereolithography method. Various stereolithography methods are known, such as SLA (stereolithography laser method: Stereolithography Apparatus), DLP (stereolithography projector (surface exposure) method: Digital Light Processing), and LCD (stereolithography liquid display method: Liquid Crystal Display). The polymer composition for stereolithography of the present invention is liquid (preferably having a viscosity of 3,000 mPa·s or less, as measured using an E-type viscometer under a cone plate with a diameter of 25 mm and a shear rate of 100 sec$^{-1}$, in an environment at a temperature of 25°C and a relative humidity of 50%), and is suitable for use in the production of an elastic shaped article using a stereolithography method.

As used herein, "(meth)acryloyl group" refers to "an acryloyl group or a methacryloyl group". The same applies to similar expressions. In the present specification, a set of values connected with "to" refers to the range of values covering the values before and after "to" as the lower and upper limits. When a plurality of lower limits and a plurality of upper limits are mentioned separately, a lower limit and an upper limit may be arbitrarily selected, and connected with "to".

<Polymer Composition for Stereolithography>

The polymer composition for stereolithography of the present invention contains a liquid polymer as a polymer, a monomer, a photopolymerization initiator, and a thermal polymerization initiator. When the polymer composition for stereolithography is cured by light irradiation, it forms an elastic shaped article. The elastic shaped article obtained by photocuring the polymer composition for stereolithography of the present invention is further heat-cured by heating.

A stereolithography method typically includes the process of sequentially laminating and photocuring layers of a polymer composition for stereolithography on a plane called the stereolithography table (stage) of stereolithography equipment. Here, the thickness of a single layer upon curing the polymer composition for stereolithography is controlled to a lamination thickness of about 0.01 to 0.5 mm. Thereafter, the layer is irradiated with light (UV) to form a photocured layer (cured product) with a thickness of about 0.01 to 0.5 mm. Immediately after the photocuring, the stereolithography table moves to create an identical gap with a thickness of about 0.01 to 0.5 mm. The polymer composition for stereolithography is flown into the gap, and a photocured layer (cured product) is formed by light irradiation. By repeating this process, photocured layers are gradually laminated to increase the thickness of the elastic shaped article. Because the polymer composition for stereolithography of the present invention contains a thermal polymerization initiator, the photocured layers are heat-cured upon heating, which improves the mechanical strength of the elastic shaped article. As stated above, in the production of a shaped article using a composition for stereolithography, after the shaped article is formed, it may be further subjected to a secondary treatment in which the entire shaped article is irradiated with light. In this case, if the shaped article has a complicated structure, light may not sufficiently reach the inside of the shaped article, and the shaped article may not be sufficiently cured. In the present invention, even if the elastic shaped article has a complicated shape, the elastic shaped article can be suitably cured by the secondary treatment by heating the entire elastic shaped article.

The liquid polymer is not limited, and may be a known one, or may be a commercial product. Specific examples of liquid polymers include liquid butadiene, liquid styrene-butadiene copolymer, liquid isoprene-butadiene copolymer, liquid isoprene, liquid hydrogenated isoprene, liquid isoprene-styrene copolymer, and liquid isobutylene. From the viewpoint of achieving a viscosity suitable for stereolithography while imparting excellent properties (e.g., the below-described Shore hardness, tensile strength at break, tensile elongation at break, compression set, and repeated fatigue property) to the elastic shaped article obtained by curing, preferred among the above are a liquid polymer having an unsaturated bond such as a (meth)acryloyl group or a vinyl group that is crosslinkable by light, and a liquid polymer having a cyclic ether such as an epoxy compound or an oxetane compound; and particularly preferred is a liquid polymer having a (meth)acryloyl group. From the viewpoint of improving the tensile strength at break and the tensile elongation at break of the elastic shaped article, particularly preferred liquid polymers are liquid isoprene having a (meth)acryloyl group and liquid isobutylene having a (meth)acryloyl group. These liquid polymers may be used alone or in combination.

From the viewpoint of imparting excellent properties to the elastic shaped article obtained by curing, the liquid polymer content in the polymer composition for stereolithography of the present invention may be, for example, 5% by mass or more, preferably 10% by mass or more, more preferably 15% by mass or more, even more preferably 20% by mass or more, and particularly preferably 35% by mass or more, although not limited thereto. From the same viewpoint, the upper limit of the liquid polymer content in the polymer composition for stereolithography of the present invention may be, for example, 75% by mass or less, preferably 70% by mass or less, more preferably 65% by mass or less, and even more preferably 60% by mass or less.

The polymer composition for stereolithography of the present invention may contain a polymer component (e.g., a diluted polymer) different from the liquid polymer. From the viewpoint of imparting excellent properties to the elastic shaped article obtained by curing, the content of the polymer component other than the liquid polymer is preferably 15% by mass or less, more preferably 10% by mass or less, even more preferably 5% by mass or less, and particularly preferably 0% by mass.

From the same viewpoint, the number average molecular weight (Mn) of the liquid polymer is preferably 500 or more, more preferably about 5,000 to 500,000, and even more preferably about 5,000 to 400,000, about 5,000 to 50,000, or about 5,000 to 40,000, although not limited thereto.

The number average molecular weight (Mn) of the liquid polymer is the value measured using gel permeation chromatography relative to polystyrene standards.

From the same viewpoint, the liquid polymer has a viscosity of preferably 100 to 1,000,000 mPa·s, more preferably 100 to 500,000 mPa·s, even more preferably 10,000 to 450,000 mPa·s, as measured using an E-type viscometer under a cone plate with a diameter of 25 mm and a shear rate of 100 sec$^{-1}$, in an environment at a temperature of 25°C and a relative humidity of 50%.

While the monomer contained in the polymer composition for stereolithography of the present invention is not limited as long as it is a photopolymerizable monomer curable by light irradiation, examples include monofunctional monomers and polyfunctional monomers (e.g., bifunctional, trifunctional, and tetrafunctional monomers). Preferred are monofunctional to tetrafunctional monomers, from the viewpoint of achieving a viscosity suitable for stereolithography while imparting excellent properties to the elastic shaped article obtained by curing. The use of a monofunctional monomer is preferred from the viewpoint of reducing the viscosity of the polymer composition for stereolithography in a room-temperature environment. On the other hand, the use of a polyfunctional monomer is preferred from the viewpoint of imparting excellent properties to the elastic shaped article. The polymer composition for stereolithography of the present invention may contain a single monomer, or two or more monomers.

The monomer preferably includes a (meth)acrylate, which imparts excellent properties to the elastic shaped article obtained by curing, and also has excellent photocuring reactivity and heat-curing reactivity.

Examples of preferred monofunctional monomers include monofunctional acrylates. Specific examples of monofunctional monomers include ethoxylated nonylphenol acrylate, methyl 2-allyloxymethyl acrylate, isostearyl acrylate, m-phenoxybenzyl acrylate, dicyclopentanyl acrylate, isobornyl acrylate, phenoxyethyl (meth)acrylate, phenoxy-2-methylethyl (meth)acrylate, phenoxyethoxyethyl (meth)acrylate, 3-phenoxy-2-hydroxypropyl (meth)acrylate, 2-phenylphenoxyethyl (meth)acrylate, 4-phenylphenoxyethyl (meth)acrylate, 3-(2-phenylphenyl)-2-hydroxypropyl (meth)acrylate, (meth)acrylate of p-cumylphenol reacted with ethylene oxide, 2-bromophenoxyethyl (meth)acrylate, 2,4-dibromophenoxyethyl (meth)acrylate, 2,4,6-tribromophenoxyethyl (meth)acrylate, phenoxy (meth)acrylate modified with a plurality of moles of ethylene oxide or propylene oxide, isobornyl (meth)acrylate, bornyl (meth)acrylate, tricyclodecanyl (meth)acrylate, dicyclopentanyl (meth)acrylate, dicyclopentenyl (meth)acrylate, cyclohexyl (meth)acrylate, 4-butylcyclohexyl (meth)acrylate, acryloyl morpholine, 2-hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, amyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, lauryl (meth)acrylate, stearyl (meth)acrylate, isostearyl (meth)acrylate, tetrahydrofurfuryl (meth)acrylate, butoxyethyl (meth)acrylate, ethoxydiethylene glycol (meth)acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, methoxypolypropylene glycol (meth)acrylate, diacetone (meth)acrylamide, isobutoxymethyl (meth)acrylamide, N,N-dimethyl (meth)acrylamide, t-octyl (meth)acrylamide, dimethylaminoethyl (meth)acrylate, diethylaminoethyl (meth)acrylate, 7-amino-3,7-dimethyloctyl (meth)acrylate, N,N-diethyl (meth)acrylamide, N,N-dimethylaminopropyl (meth)acrylamide, hydroxybutyl vinyl ether, lauryl vinyl ether, cetyl vinyl ether, 2-ethylhexyl vinyl ether, polyoxyethylene nonylphenyl ether (meth)acrylate, and vinyl monomers (e.g., N-vinyl pyrrolidone, N-vinyl caprolactam, vinyl imidazole, and vinylpyridine).

Specific examples of polyfunctional monomers include poly(ethylene glycol) di(meth)acrylate, dipropylene glycol diacrylate, propoxylated pentyl glycol diacrylate, propoxylated glyceryl triacrylate, trimethylolpropane tri(meth)acrylate, pentaerythritol tri(meth)acrylate, pentaerythritol tetra(meth)acrylate, ethylene glycol di(meth)acrylate, tetraethylene glycol di(meth)acrylate, polypropylene glycol di(meth)acrylate, 1,4-butanediol di(meth)acrylate, 1,6-hexanediol di(meth)acrylate, neopentyl glycol di(meth)acrylate, trimethylolpropane trioxyethyl (meth)acrylate, tris(2-hydroxyethyl)isocyanurate tri(meth)acrylate, tris(acryloyloxy)isocyanurate, bis(hydroxymethyl)tricyclodecane di(meth)acrylate, dipentaerythritol hexa(meth)acrylate, di(meth)acrylate of a diol that is polyethylene oxide or propylene oxide adduct of bisphenol A, di(meth)acrylate of a diol that is ethylene oxide or propylene oxide adduct of hydrogenated bisphenol A, epoxy (meth)acrylate obtained by adding a (meth)acrylate to bisphenol A diglycidyl ether, and triethylene glycol divinyl ether.

From the viewpoint of imparting excellent properties to the elastic shaped article obtained by curing, the monomer content may be, for example, 95% by mass or less, preferably about 30 to 85% by mass, more preferably about 40 to 80% by mass, and even more preferably about 50 to 70% by mass, based on a total of 100% by mass of the liquid polymer and the monomer, in the polymer composition for stereolithography of the present invention. By increasing the proportion of the monomer (and the below-described oligomer) in the polymer composition for stereolithography, the compression set of the elastic shaped article can be reduced.

The polymer composition for stereolithography of the present invention may further contain an oligomer, and preferably contains an oligomer. An oligomer is, for example, a polymer formed of about 10 to 100 monomer units bound together. The oligomer contained in the polymer composition for stereolithography of the present invention is not limited as long as it is curable by light irradiation. The oligomer preferably includes a (meth)acrylate, which is preferably, for example, a urethane (meth)acrylate (having an acrylic group and a urethane bond by the reaction of an isocyanate group and a hydroxyl group) or an epoxy (meth)acrylate (obtained by polymerizing an epoxy resin with a (meth)acrylic acid). Alternatively, other oligomers with a (meth)acrylate are also usable. These oligomers may be used alone or in combination.

When the polymer composition for stereolithography of the present invention contains an oligomer, the oligomer content is preferably about 30 to 90% by mass, more preferably about 40 to 80% by mass, and even more preferably about 50 to 70% by mass, based on a total of 100% by mass of the liquid polymer, the monomer, and the oligomer, in the polymer composition for stereolithography of the present invention, from the viewpoint of imparting excellent properties to the elastic shaped article obtained by curing. By including the oligomer in the polymer composition for stereolithography, the compression set of the elastic shaped article can be reduced. When the polymer composition for stereolithography of the present invention contains an oligomer, the total content of the monomer and the oligomer is preferably about 30 to 90% by mass, more preferably about 40 to 80% by mass, and even more preferably about 50 to 70% by mass, based on a total of 100% by mass of the liquid polymer, the monomer, and the oligomer, in the polymer composition for stereolithography of the present invention, from the viewpoint of achieving a viscosity suitable for a stereolithography method in a room-temperature environment while imparting excellent properties to the elastic shaped article obtained by curing. As stated above, by increasing the proportion of the monomer and the oligomer in the polymer composition for stereolithography, the compression set of the elastic shaped article can be reduced.

In the polymer composition for stereolithography of the present invention, the monomer and the oligomer each serve as reactive diluents, which adjust the viscosity in a room-temperature environment while adjusting the properties of the elastic shaped article after curing.

The polymer composition for stereolithography of the present invention contains a photopolymerization initiator. The inclusion of a photopolymerization initiator can accelerate curing of the polymer composition for stereolithography. The photopolymerization initiator is not limited, and may be any of known photopolymerization initiators that generate radicals upon light irradiation. Suitable photopolymerization initiators include alkylphenones (e.g., 2-hydroxy-2-methylpropiophenone, 2,2-dimethoxy-2-phenylacetophenone, 1-hydroxycyclohexylphenyl ketone, 2-hydroxy-4'-(2-hydroxyethoxy)-2-methylpropiophenone, 2-(4-(methylthio)benzoyl)-2-(4-morpholinyl)propane, 2-(dimethylamino)-1-(4-morpholinophenyl)-2-benzyl-1-butanone, and 2-(dimethylamino)-2-(4-methylbenzyl)-1-(4-morpholinophenyl)butan-1-one); acylphosphine oxides (e.g., bis(2,4,6-trimethylbenzoylphenylphosphine oxide and 2,4,6-trimethylbenzoyldiphenylphosphine oxide); and oxime esters (e.g., 1,2-octanedione, 1-(4-(phenylthio)-, 2-(O-benzoyloxime)), ethanone, 1-(9-ethyl-6-(2-methylbenzoyl)-9H-carbazol-3-yl)-, 1-(O-acetyloxime)). A stereolithography method typically employs a light source with an emission-intensity peak wavelength of 390 to 410 nm, particularly a light source with an emission-intensity peak wavelength of 405 nm. It is thus preferred to initiate radical polymerization of the polymer composition for stereolithography by irradiation of light from such a light source. These photopolymerization initiators may be used alone or in combination. From the viewpoint of suitably curing the polymer composition for stereolithography in a stereolithography method using such a light source, the polymer composition for stereolithography of the present invention preferably contains at least two photopolymerization initiators with different absorption bands. For example, it is preferred to use a photopolymerization initiator with an absorption band in a wavelength range of 405 nm and a photopolymerization initiator with an absorption band in a wavelength range of 300 to 380 nm in combination.

The photopolymerization initiator content is preferably about 0.5 to 10 parts by mass, and more preferably about 1 to 7 parts by mass, per 100 parts by mass of the liquid polymer.

The polymer composition for stereolithography of the present invention further contains a thermal polymerization initiator. The inclusion of a thermal polymerization initiator allows the photocured layer, after it is formed, to be further heat-cured, which improves the mechanical strength of the elastic shaped article. Furthermore, even if the elastic shaped article has a complicate shape, the inside of the elastic shaped article can be sufficiently cured by heating the entire elastic shaped article. The thermal polymerization initiator is not limited, and may be any of known thermal polymerization initiators that generate radicals upon heating. Examples include organic peroxides and azo compounds.

Organic peroxides have "-OO-" (oxygen-oxygen bond) in their molecules. The -OO- bond thermally decomposes at a relatively low temperature to generate radicals. Preferred chemical structures of organic peroxides include ketone peroxides, peroxyketals, hydroperoxides, dialkyl peroxides, diacyl peroxides, peroxyesters, and peroxydicarbonates. Examples of ketone peroxides include methyl ethyl ketone peroxide and acetylacetone peroxide. Examples of peroxyketals include n-butyl-4,4'-di(tert-butylperoxy)valerate and 1,1-di(tert-butylperoxy)cyclohexane. Examples of hydroperoxides include tert-butyl hydroperoxide, cumene hydroperoxide, and 1,1,3,3-tetramethylbutyl hydroperoxide. Examples of dialkyl peroxides include dicumyl peroxide, 1,3-1,4-bis(tert-butylperoxyisopropyl)benzene, 2,5-dimethyl-2,5-di(tert-butylperoxy)hexane, tert-butylcumyl peroxide, and 2,5-dimethyl-2,5-di(tert-butylperoxy)hexin-3. Examples of diacyl peroxides include di(3,5,5-trimethylhexanol) peroxide and benzoyl peroxide. Examples of peroxyesters include cumyl peroxyneodecanate, 2,5-dimethyl-2,5-di(2-ethylhexanolperoxy)hexane, 2,5-dimethyl-2,5-di(benzoyl peroxy)hexane, tert-butyl peroxyacetate, and tert-butyl peroxybenzoate. Examples of peroxydicarbonates include diisopropyl peroxydicarbonate and bis(4-tert-butylcyclohexyl) peroxydicarbonate.

While the conditions for heat-curing by heating using an organic peroxide depend on the type of the organic peroxide, the heating temperature is preferably 70 to 170°C, for example. The heating time can be adjusted according to the half-life temperature of the organic peroxide. For an organic peroxide, the decomposition temperature for achieving a 1-hour half-life may be 50 to 200°C, for example. The 10-hour half-life temperature may be, for example, 30 to 170°C. Since an organic peroxide in pure form has the risk of explosion and the like due to its susceptibility to decomposition, it is diluted with a solvent, an inorganic substance, or the like.

An azo compound has two organic groups connected by an azo group (-N=N-) composed of nitrogen molecules, and is represented by RN=N-R'. The reaction of the azo compound takes place as follows: upon heating, the -N=N- bond decomposes while generating nitrogen to produce two radicals. Suitable azo compounds include azobisisobutyronitrile (AIBN), 2,2'-azobis(2,4-dimethylvaleronitrile) (ABVN), 4,4'-azobis(4-cyanopentanoic acid) (ABCVA), 2,2'-azobis(2-methylbutyronitrile) (AMBN), 2,2'-azobis(2-methylpropionamidine) dihydrochloride (AAPH), dimethyl 2,2'-azobis(2-methylpropionate), and 2,2'-azobis[2-(2-imidazolin-2-yl)propane] dihydrochloride. The azo compound is preferably heated at 90 to 120°C. The azo compound has a 10-hour half-life temperature of 40 to 80°C, for example.

In the polymer composition for stereolithography of the present invention, the thermal polymerization initiator (active ingredient (solids content)) content is preferably 0.3 to 10 parts by mass, and more preferably 0.5 to 7 parts by mass, per 100 parts by mass of the active-ingredient liquid polymer. The organic peroxide and the azo compound may be used in combination.

The polymer composition for stereolithography of the present invention may further contain various additives, as long as they do not impair the effects of the present invention. Examples of additives include, without limitation, known additives added to compositions for stereolithography, for example, diluted polymers, photosensitizers, fillers, UV blockers, dyes, pigments, leveling agents, fluidity modifiers, defoaming agents, plasticizers, polymerization inhibitors, flame retardants, dispersion stabilizers, storage stabilizers, antioxidants, metals, metal oxides, metal salts, and ceramics. The polymer composition for stereolithography may contain a single additive or two or more additives. The total additive content in the polymer composition for stereolithography is preferably 5% by mass or less, more preferably 3% by mass or less, and may even be 0% by mass.

The polymer composition for stereolithography of the present invention can be easily produced by mixing a liquid polymer, a monomer, a photopolymerization initiator, a thermal polymerization initiator, optionally an oligomer, various additives, and the like.

<Elastic Shaped Article>

The elastic shaped article of the present invention is a cured product of the above-described polymer composition for stereolithography. Specifically, the elastic shaped article of the present invention is cured by irradiating the polymer composition for stereolithography with light. The elastic shaped article of the present invention is particularly preferably obtained by heat-curing after the polymer composition for stereolithography is irradiated with light.

While the Shore A hardness of the elastic shaped article of the present invention may be set appropriately according to the hardness required for the product, it is preferably in the range of 25 or more, and more preferably 25 to 90, from the viewpoint of imparting excellent properties. Specifically, an elastic shaped article (in the shape of a 29 mm (diameter) × 12.5 mm compressed ball as defined in JIS K6262:2013) produced from the polymer composition for stereolithography of the present invention, using the DLP stereolithography method, at a temperature of 25°C, a UV wavelength of 405 nm, a lamination pitch of 0.05 mm, a UV irradiation time of 20 seconds per layer, and a UV irradiance of 5.0 mW/cm$^2$ (more preferably, the obtained elastic shaped article is heated at a temperature of 90 to 110°C for a time of 30 to 60 minutes), preferably has a Shore A hardness of 25 or more, and more preferably has a Shore A hardness of 25 to 90. As used herein, the Shore A hardness of the elastic shaped article is the value measured according to the method as defined in JIS K6253-3:2012.

While the tensile strength at break of the elastic shaped article of the present invention may be set appropriately according to the tensile strength at break required for the product, it is preferably 5.0 MPa or more, and more preferably 5.5 MPa or more. Specifically, an elastic shaped article (in the shape of a dumbbell-shaped No. 3 specimen as defined in JIS K6251:2017) produced from the polymer composition for stereolithography of the present invention, using the DLP stereolithography method, at a temperature of 25°C, a UV wavelength of 405 nm, a lamination pitch of 0.05 mm, a UV irradiation time of 20 seconds per layer, and a UV irradiance of 5.0 mW/cm$^2$ (more preferably, the obtained elastic shaped article is heated at a temperature of 90 to 110°C for a time of 30 to 60 minutes), preferably has a tensile strength at break of 5.0 MPa or more, and more preferably has a tensile strength at break of 5.5 MPa or more. As used herein, the tensile strength at break of the elastic shaped article is the value measured according to the method as defined in JIS K6251:2017. The upper limit of the tensile strength at break of the elastic shaped article may be, for example, 50 MPa or less, or 15.0 MPa or less.

While the tensile elongation at break of the elastic shaped article of the present invention may be set appropriately according to the tensile elongation at break required for the product, it is preferably 30% or more, more preferably 70% or more, and even more preferably 100% or more. Specifically, an elastic shaped article (in the shape of a dumbbell-shaped No. 3 specimen as defined in JIS K6251:2017) produced from the polymer composition for stereolithography of the present invention, using the DLP stereolithography method, at a temperature of 25°C, a UV wavelength of 405 nm, a lamination pitch of 0.05 mm, a UV irradiation time of 20 seconds per layer, and a UV irradiance of 5.0 mW/cm$^2$ (more preferably, the obtained elastic shaped article is heated at a temperature of 90 to 110°C for a time of 30 to 60 minutes), preferably has a tensile elongation at break of 30% or more, more preferably has a tensile elongation at break of 70% or more, and even more preferably has a tensile elongation at break of 100% or more. As used herein, the tensile elongation at break of the elastic shaped article is the value measured according to the method as defined in JIS K6251:2017. The upper limit of the tensile elongation at break of the elastic shaped article may be, for example, 1000% or less.

The compression set of the elastic shaped article of the present invention may be set appropriately according to the compression set required for the product. From the viewpoint of imparting excellent properties, the elastic shaped article of the present invention has a compression set of preferably 10% or less, more preferably 7% or less, even more preferably 5% or less, as measured according to the method as defined in JIS K6262:2013, in which the elastic shaped article is compressed 25% for 22 hours at a temperature of 23°C, and then the compression is released for 0.5 hour. Specifically, an elastic shaped article (in the shape of a 29 mm (diameter) × 12.5 mm compressed ball as defined in JIS K6262:2013) produced from the polymer composition for stereolithography of the present invention, using the DLP stereolithography method, at a temperature of 25°C, a UV wavelength of 405 nm, a lamination pitch of 0.05 mm, a UV irradiation time of 20 seconds per layer, and a UV irradiance of 5.0 mW/cm$^2$ (more preferably, the obtained elastic shaped article is heated at a temperature of 90 to 110°C for a time of 30 to 60 minutes), preferably has a compression set of 10% or less, more preferably has a compression set of 7% or less, and even more preferably has a compression set of 5% or less, as measured using the above-described method.

The elastic shaped article of the present invention may be formed into any desired shapes by a stereolithography method, without limitation.

The elastic shaped article of the present invention can be produced by any known stereolithography methods, using the above-described polymer composition for stereolithography as a raw material, without limitation. The method for producing a polymer shaped article of the present invention will be described in detail in the "Method for Producing Elastic Shaped Article" section below.

<Method for Producing Elastic Shaped Article>

The method for producing an elastic shaped article of the present invention can be suitably performed by using the polymer composition for stereolithography of the present invention instead of a liquid resin, in a conventionally known stereolithography method that uses the liquid resin as a raw material. Specifically, the elastic shaped article can be produced using the polymer composition for stereolithography of the present invention instead of a liquid resin, in various stereolithography methods such as SLA (stereolithography laser method: Stereolithography Apparatus), DLP (stereolithography projector (surface exposure) method: Digital Light Processing), and LCD (stereolithography liquid display method: Liquid Crystal Display).

The elastic shaped article of the present invention is suitably produced using, for example, a method including the steps of forming a first-layer cured product by supplying the polymer composition for stereolithography of the present invention onto a stereolithography table, and irradiating the polymer composition for stereolithography with light to cure the polymer composition for stereolithography; forming a second-layer cured product by supplying the polymer composition for stereolithography for forming the second-layer cured product onto the first-layer cured product, and irradiating the polymer composition for stereolithography with light to cure the polymer composition for stereolithography; and repeating the same step as the step of forming the second-layer cured product until an Nth layer is formed to produce an elastic shaped article (stereolithography article) with a three-dimensional shape. For a stereolithography method, a known 3D printer can be used, and such a 3D printer may be a commercial product.

In a stereolithography method, the thickness of a single layer upon curing the polymer composition for stereolithography is, for example, about 0.01 to 0.5 mm. The irradiation light is typically ultraviolet light, and preferably includes light with a wavelength of 405 nm. The irradiation light typically has an irradiance of about 0.1 to 100 mW/cm$^2$ in a measurement wavelength range of 405 nm. The irradiation time for curing a single layer of the polymer composition for stereolithography depends on the stereolithography method, and may be adjusted appropriately. For example, in the DLP method, the irradiation time is about 1 to 60 seconds. The elastic shaped article of the present invention is preferably produced in an environment at about room temperature (e.g., 20 to 30°C).

After the above-described stereolithography, optionally, a general secondary treatment, such as high-pressure mercury lamp irradiation, metal halide lamp irradiation, UV-LED irradiation, or heating, may be additionally performed. The secondary treatment can modify the surface after stereolithography, improve the strength, or accelerate curing. The secondary treatment can be performed in combination with stereolithography, although the secondary treatment is not necessarily required, since it may be unnecessary depending on the stereolithography conditions.

In particular, when heating is employed as a secondary treatment in the method for producing an elastic shaped article of the present invention, any unreacted monomer contained in the elastic shaped article can be cured by radicals generated from the thermal polymerization initiator, which can further increase the mechanical strength.

The conditions for heating the elastic shaped article may be adjusted appropriately according to, for example, the types or contents of the monomer and thermal polymerization initiator used. For example, the temperature may be about 90 to 110°C, and the time may be about 30 to 60 minutes.

EXAMPLES

Examples of the present invention will be hereinafter described, although the present invention is not limited to the following examples. Table 1 shows the details of the materials used in the examples and comparative examples.

[Table 1]

| Material | | | Product Name | Manufacturer | Number average molecular weight (Mn) | Viscosity at 25°C mPa ·s |
|---|---|---|---|---|---|---|
| Liquid polymer | Liquid polymer with a (meth)acryloyl group | Ester compound (98%) of maleic anhydride adduct of isoprene polymer and 2-hydroxyethyl methacrylate | UC-102M | KURARAY CO., LTD. | 17,000 | 60,000 |
| Monomer | Monofunctional acrylate | Isobomyl acrylate | IBXA | OSAKA ORGANIC CHEMICAL INDUSTRY LTD. | 208 | 9 |
| Photopolymerization initiator | Alkylphenone | 2-Hydroxy-2-methylpropiophenone | Omnirad (Irgacure) 1173 | BASF | 164 | 25 |
| | Acylphosphine oxide | Bis(2,4,6-trimethylbenzoyl)phenylphosphine oxide | Omnirad (Irgacure) 819 | | 419 | - |
| Thermal polymerization initiator | Organic peroxide | Benzoyl peroxide product diluted to 30% | Nyper-E | NOF CORPORATION | - | - |
| | Azo compound | Azobisisobutyronitrile | AIBN | TOKYO CHEMICAL INDUSTRY CO., LTD. | - | - |

Benzoyl peroxide used as a thermal polymerization initiator has a 1-hour half-life temperature of 92.0°C, a 10-hour half-life temperature of 73.6°C, and an activation energy of 131.8 kJ/mol. Azobisisobutyronitrile used as a thermal polymerization initiator has a 1-hour half-life temperature of 84.4°C, a 10-hour half-life temperature of 65.0°C, and an activation energy of 132.4 kJ/mol.

<Examples 1 to 4 and Comparative Example 1>

(Production of Polymer Compositions for Stereolithography)

Polymer compositions for stereolithography were each produced by mixing the materials with a stirrer capable of rotating and revolving, in the proportions (parts by mass) listed in Table 2, and degassing the mixture. The components were mixed to homogeneity. In Table 2, "-" indicates that the component was not added.

(Production of Elastic Shaped Articles)

Using each of the polymer compositions for stereolithography obtained in the examples and comparative examples, an elastic shaped article was produced by the DLP stereolithography method. Specifically, the elastic shaped article was produced using a 3D printer equipped with a light source (UV-LED) with a peak wavelength of 405 nm, at a temperature of 25°C, a lamination pitch of 0.05 mm, an irradiation time of 20 seconds per layer, and an irradiance of 5.0 mW/cm$^2$ at a wavelength of 405 nm. The obtained elastic shaped article was further heated under the heat-curing conditions (temperature and time) listed in Table 1 to obtain a heat-cured elastic shaped article. The heat-cured elastic shaped article was measured for the below-described properties. The elastic shaped article was produced in three shapes. The first shape was the dumbbell-shaped No. 3 specimen as defined in JIS K6251:2017, used in the below-described tensile test. The second shape was a 29 mm (diameter) × 12.5 mm compressed ball as defined in JIS K6262:2013, used in the below-described measurement of hardness and compression set. The third shape was a specimen as defined in JIS K6260:2017 (dimensions: length 150 mm, width 25 mm, radius of curvature of central groove 2.38 mm, thickness 6.3 mm), used in the below-described repeated fatigue test.

(Hardness of Elastic Shaped Article)

For each of the elastic shaped articles (in the shape of a 29 mm (diameter) × 12.5 mm compressed ball as defined in JIS K6262:2013) obtained in the examples and comparative examples, the Shore A hardness was measured according to the method as defined in JIS K6253-3:2012. The results are shown in Table 2.

(Tensile Test for Elastic Shaped Article)

For each of the elastic shaped articles (in the shape of a dumbbell-shaped No. 3 specimen as defined in JIS K6251:2017) obtained in the examples and comparative examples, the tensile strength at break and the tensile elongation at break were measured as defined in JIS K6251:2017. The results are shown in Table 2. The greater the value of tensile strength at break is, the higher the strength of the elastic shaped article is, and the greater the value of tensile elongation at break is, the easier the elongation is, and thus, the better the mechanical properties of the elastic shaped article are.

(Compression Set)

For each of the elastic shaped articles (in the shape of a 29 mm (diameter) × 12.5 mm compressed ball as defined in JIS K6262:2013) obtained in the examples and comparative examples, the compression set was measured according to the method as defined in JIS K6262:2013, in which the elastic shaped article was compressed 25% for 22 hours at a temperature of 23°C, and then the compression was released for 0.5 hour. The results are shown in Table 2. The smaller the value of compression set is, the better the resilience of the elastic shaped article is.

(Repeated Fatigue Test)

For each of the elastic shaped articles (a specimen as defined in JIS K6260:2017 (dimensions: length 150 mm, width 25 mm, radius of curvature of central groove 2.38 mm, thickness 6.3 mm)) obtained in the examples and comparative examples, a repeated fatigue test was performed using a De Mattia-type flex tester, as defined in JIS K6260:2017. A cut was made in the central groove of the specimen, and the specimen was subjected to repeated flexing at 5 Hz and a strain of 50% applied to the central groove. The degree of crack growth at the time was measured. The crack growth (cycle/mm) is calculated according to the equation shown below. The number of flexing cycles required for the crack to grow 1 mm was counted. The results are shown in Table 2. The greater the value is, the longer it takes for the crack to grow 1 mm, and thus, the better the result of the repeated fatigue test (resistance to flex crack growth) is.

$$\text{Crack growth (cycle/mm)} = \text{the number of flexing cycles (cycle)/crack length (mm)}$$

[Table 2]

| | | | Comparative Example 1 | Example 1 | Example 2 | Example 3 | Example 4 |
|---|---|---|---|---|---|---|---|
| Composition (part(s) by mass) of polymer composition | Liquid polymer | Liquid polymer with a (meth)acryloyl group | 50 | 50 | 50 | 50 | 50 |
| | Monomer | Monofunctional acrylate | 50 | 50 | 50 | 50 | 50 |
| | Photopolymerization initiator | Alkylphenone | 1.5 | 1.5 | 1.5 | 1.5 | 1.5 |
| | | Acylphosphine oxide | 0.7 | 0.7 | 0.7 | 0.7 | 0.7 |
| | Thermal polymerization initiator | Organic peroxide* | — | 0.3 | 10.0 | — | — |
| | | Azo compound* | — | — | — | 0.3 | 10.0 |
| Heat-curing conditions for elastic shaped article | | Temperature (°C) | — | 110 | 110 | 90 | 90 |
| | | Time (min) | — | 30 | 30 | 50 | 50 |
| Physical properties of elastic shaped article | | Shore A hardness (23°C) | 63 | 66 | 95 | 65 | 76 |
| | | Tensile strength at break (23°C, MPa) | 10.5 | 11.8 | 23.5 | 11.3 | 17.4 |
| | | Tensile elongation at break (23°C, %) | 130 | 155 | 265 | 150 | 240 |
| | | Compression set (23°C, 22 h, %) | 3.2 | 3.1 | 2.5 | 3.1 | 2.7 |
| | | Repeated fatigue (cycle/mm) | 6,000 | 7,000 | 11,000 | 7,000 | 9,000 |

*In Table 2, the proportions of the organic peroxide and the azo compound are expressed in terms of solids content.

As shown in Table 2, the polymer compositions for stereolithography of Examples 1 to 4 each contain a liquid polymer, a monomer, photopolymerization initiators, and a thermal polymerization initiator. The polymer compositions for stereolithography of Examples 1 to 4 are suitable for use in a stereolithography method, and can produce desired elastic shaped articles. Furthermore, the polymer compositions for stereolithography of Examples 1 to 4, after forming elastic shaped articles, are further cured upon heating to produce elastic shaped articles with particularly improved resistance to repeated fatigue. The produced elastic shaped articles are also satisfactory in terms of physical properties such as hardness, tensile strength at break, tensile elongation at break, and compression set.

**Claims**

1. A polymer composition for stereolithography comprising a liquid polymer, a monomer, a photopolymerization initiator, and a thermal polymerization initiator.

2. The polymer composition for stereolithography according to claim 1, wherein the liquid polymer has a (meth)acryloyl group.

3. The polymer composition for stereolithography according to claim 1 or 2, wherein the liquid polymer contains at least one of liquid isoprene having a (meth)acryloyl group and liquid isobutylene having a (meth)acryloyl group.

4. The polymer composition for stereolithography according to any one of claims 1 to 3, wherein the liquid polymer has a number average molecular weight of 5,000 or more and 500,000 or less.

5. The polymer composition for stereolithography according to any one of claims 1 to 4, wherein the liquid polymer has a viscosity of 100 mPa·s or more and 1,000,000 mPa·s or less, as measured using an E-type viscometer under a cone plate with a diameter of 25 mm and a shear rate of 100 sec$^{-1}$, in an environment at a temperature of 25°C and a relative humidity of 50%.

6. The polymer composition for stereolithography according to any one of claims 1 to 5, wherein the liquid polymer content is 15% by mass or more and 70% by mass or less.

7. The polymer composition for stereolithography according to any one of claims 1 to 6, wherein the monomer content is 30% by mass or more and 85% by mass or less, based on a total of 100% by mass of the liquid polymer and the monomer.

8. The polymer composition for stereolithography according to any one of claims 1 to 7, further comprising an oligomer, wherein
   the monomer content is 30% by mass or more and 90% by mass or less, based on a total of 100% by mass of the liquid polymer, the monomer, and the oligomer.

9. The polymer composition for stereolithography according to any one of claims 1 to 8, further comprising an oligomer, wherein
   a total content of the monomer and the oligomer is 30% by mass or more and 90% by mass or less, based on a total of 100% by mass of the liquid polymer, the monomer, and the oligomer.

10. The polymer composition for stereolithography according to claim 8 or 9, wherein the oligomer is at least one of a urethane (meth)acrylate and an epoxy (meth)acrylate.

11. The polymer composition for stereolithography according to any one of claims 8 to 10, wherein the oligomer contains a (meth)acrylate.

12. The polymer composition for stereolithography according to any one of claims 1 to 11, wherein the monomer is at least one of monofunctional to tetrafunctional.

13. The polymer composition for stereolithography according to any one of claims 1 to 12, wherein the monomer contains a (meth)acrylate.

14. An elastic shaped article, which is a cured product of the polymer composition for stereolithography according to any one of claims 1 to 13.

15. A method for producing an elastic shaped article, comprising the steps of:

    forming a first-layer cured product by supplying the polymer composition for stereolithography according to any one of claims 1 to 13 onto a stereolithography table, and irradiating the polymer composition for stereolithography with light to cure the polymer composition for stereolithography;
    forming a second-layer cured product by supplying the polymer composition for stereolithography for forming the second-layer cured product onto the first-layer cured product, and irradiating the polymer composition for stereolithography with light to cure the polymer composition for stereolithography;
    repeating the same step as the step of forming the second-layer cured product until an Nth layer is formed to produce an elastic shaped article with a three-dimensional shape; and
    heating the elastic shaped article.

Europäisches
Patentamt

European
Patent Office

Office européen
des brevets

# EUROPEAN SEARCH REPORT

Application Number

EP 21 20 0052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/181433 A1 (YOSHINAGA HISAO [JP] ET AL) 11 June 2020 (2020-06-11) | 1-15 | INV. B29C64/00 C08F290/04 C08L51/04 |
| Y | * paragraphs [0001], [0006] - [0028]; claims 1-14 * <br> * paragraphs [0065], [0093] * <br> * paragraphs [0096] - [0107] * | 1-15 | |
| X | JP 2020 044763 A (SUMITOMO RUBBER IND) 26 March 2020 (2020-03-26) | 1-15 | |
| Y | * paragraphs [0001] - [0010]; claims 1-15 * <br> * paragraphs [0031], [0036] * <br> * paragraphs [0051] - [0054] * | 1-15 | |
| X | US 2019/010311 A1 (YOSHINAGA HISAO [JP] ET AL) 10 January 2019 (2019-01-10) | 1-15 | |
| Y | * paragraphs [0001] - [0025], [0031], [0041], [0061], [0075]; claims 1-14 * | 1-15 | |
| Y | WO 2016/134972 A1 (PHILIPS LIGHTING HOLDING BV [NL]) 1 September 2016 (2016-09-01) <br> * pages 1-4; claims 1-9 * <br> * pages 13-15 * | 1-15 | TECHNICAL FIELDS SEARCHED (IPC) <br><br> B29C <br> C09J <br> C08F |
| Y | US 2019/092951 A1 (WANG LIAN [US] ET AL) 28 March 2019 (2019-03-28) <br> * paragraphs [0003] - [0013], [0067], [0108] - [0157]; claims 1-20 * | 1-15 | C08L |

The present search report has been drawn up for all claims

| Place of search | Date of completion of the search | Examiner |
|---|---|---|
| Munich | 24 February 2022 | Alevizopoulou, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 20 0052

24-02-2022

| Patent document cited in search report | | Publication date | Patent family member(s) | | Publication date |
|---|---|---|---|---|---|
| US 2020181433 | A1 | 11-06-2020 | CN 111212722 | A | 29-05-2020 |
| | | | EP 3705263 | A1 | 09-09-2020 |
| | | | JP WO2019035387 | A1 | 16-07-2020 |
| | | | US 2020181433 | A1 | 11-06-2020 |
| | | | WO 2019035387 | A1 | 21-02-2019 |
| JP 2020044763 | A | 26-03-2020 | NONE | | |
| US 2019010311 | A1 | 10-01-2019 | CN 108712955 | A | 26-10-2018 |
| | | | EP 3418037 | A1 | 26-12-2018 |
| | | | JP 6954264 | B2 | 27-10-2021 |
| | | | JP WO2017154335 | A1 | 27-12-2018 |
| | | | US 2019010311 | A1 | 10-01-2019 |
| | | | WO 2017154335 | A1 | 14-09-2017 |
| WO 2016134972 | A1 | 01-09-2016 | NONE | | |
| US 2019092951 | A1 | 28-03-2019 | CN 111417672 | A | 14-07-2020 |
| | | | EP 3694907 | A1 | 19-08-2020 |
| | | | US 2019092951 | A1 | 28-03-2019 |
| | | | WO 2019067604 | A1 | 04-04-2019 |

EPO FORM P0459

**EP 3 981 578 A1**

**Patent documents cited in the description**

- WO 2017154335 A